Europäisches Patentamt

European Patent Office

Office européen des brevets

(19)

(11) Veröffentlichungsnummer: **0 268 758 B1**

# EUROPÄISCHE PATENTSCHRIFT

(12)

(45) Veröffentlichungstag der Patentschrift: **08.05.91**

(51) Int. Cl.5: **B23B 31/02**, B23B 31/12

(21) Anmeldenummer: **87112787.4**

(22) Anmeldetag: **02.09.87**

(54) **Bohrfutter.**

(30) Priorität: **21.11.86 DE 3639812**

(43) Veröffentlichungstag der Anmeldung:
**01.06.88 Patentblatt 88/22**

(45) Bekanntmachung des Hinweises auf die
Patenterteilung:
**08.05.91 Patentblatt 91/19**

(84) Benannte Vertragsstaaten:
**CH ES FR GB IT LI**

(56) Entgegenhaltungen:
**DE-A- 2 842 783**
**DE-A- 3 241 528**
**DE-A- 3 422 195**

(73) Patentinhaber: **Röhm, Günter Horst**
**Heinrich-Röhm-Strasse 50**
**W-7927 Sontheim(DE)**

(72) Erfinder: **Röhm, Günter Horst**
**Heinrich-Röhm-Strasse 50**
**W-7927 Sontheim(DE)**

(74) Vertreter: **Fay, Hermann, Dipl.-Phys. Dr.**
**Ensingerstrasse 21 Postfach 1767**
**W-7900 Ulm (Donau)(DE)**

EP 0 268 758 B1

## Beschreibung

Die Erfindung betrifft ein Bohrfutter mit einem zur Aufnahme im Werkzeughalter einer Hammerbohrmaschine ausgebildeten Adapterschaft, der drehschlüssig und mit axialem Verschiebungsspiel im Bohrfutter gehalten ist, das einen axialen Durchgang aufweist, durch den hindurch die Schlagwirkung des Adapterschafts auf das Ende eines im Bohrfutter zwischen zentrisch verstellbaren Futterbacken gehaltenen Bohrers übertragbar ist.

Derartige Bohrfutter sind beispielsweise aus der DE-OS 28 42 783 bekannt und ermöglichen es, mit der Hammerbohrmaschine anstelle von ihrem Werkzeughalter speziell angepaßten Bohrwerkzeugen auch andere Bohrer zu betreiben, indem diese im Bohrfutter an dessen dem Durchmesser des Bohrerschaftes anpaßbaren Futterbacken gehalten werden und das Bohrfutter mit dem Adapterschaft in den Werkzeughalter der Hammerbohrmaschine eingesetzt wird, wozu das Ende das Adapterschaftes wie die Enden der dem Werkzeughalter speziell angepaßten Bohrwerkzeuge ausgebildet ist. Dabei besitzt der Adapterschaft nich nur im Werkzeughalter der Hammerbohrmaschine, sondern auch im Bohrfutter ein jeweils durch feste Anschläge begrenztes freies axiales Bewegungsspiel, damit die Schlagwirkung der Hammerbohrmaschine beim hämmernden Bohren möglichst unbeeinträchtigt durch das Bohrfutter auf den im Bohrfutter ebenfalls axial verschieblich gehaltenen Bohrer übertragen werden kann. Ist aber ein rein drehendes Bohren beabsichtigt und dazu der Bohrer fest zwischen den Futterbacken eingespannt, so kann das axiale Verschiebungsspiel des Adapterschafts sehr stören, weil es die Genauigkeit beim Bohrvorgang beeinträchtigt.

Der Erfindung liegt die Aufgabe zugrunde, ein Bohrfutter der eingangs genannten Art so auszubilden, daß in einfacher Weise das axiale Verschiebungsspiel des Adapterschafts sowohl im Werkzeughalter der Hammerbohrmaschine als auch im Bohrfutter ausgeschaltet und eine praktisch starre Verbindung zwischen dem Bohrfutter und dem Werkzeughalter hergestellt werden kann.

Diese Aufgabe wird nach der Erfindung dadurch gelöst, daß am Bohrfutter ein Anschlagstück geführt ist, das über das auf der Seite das Adapterschafts befindliche Ende des Bohrfutters hinaus axial verstellbar und in dieser Richtung kraft- und formschlüssig gegen den Werkzeughalter der Hammerbohrmaschine verspannbar ist.

Diese Verspannung des Anschlagstücks gegen den Werkzeughalter hat nicht nur zur Folge, daß jegliches axiales Bewegungsspiel des Adapterschafts im Werkzeughalter und im Bohrfutter behoben wird und beide über das Anschlagstück praktisch starr miteinander verbunden werden, sondern daß der Adapterschaft im Werkzeughalter auch in seine vordere, üblicherweise das Bewegungsspiel nach vorn begrenzende und durch einen entsprechenden Anschlag festgelegte Endstellung gebracht und dadurch der Einwirkung des die Schlagwirkung in der Hammerbohrmaschine ausübenden Döppers entzogen wird, selbst wenn bei beabsichtigtem rein drehenden Bohren versehentlich das Hammerwerk der Maschine nicht ausgeschaltet worden sein sollte. Das Anschlagstück in seiner verspannten Stellung hat also zusätzlich auch eine Sicherungsfunktion gegen eine Fehlbedienung der Hammerbohrmaschine zur Folge.

Eine bevorzugte Ausführungsform der Erfindung ist dadurch gekennzeichnet, daß in Bezug auf einen die Futterbacken und den Adapterschaft aufnehmenden und führenden Futterkörper das axial verschiebbar und undrehbar angeordnete Anschlagstück mit einem Außengewinde in eine drehbar und axial unverschiebbar gelagerte Ringmutter greift. Durch Verdrehen dieser Ringmutter von Hand kann im Ergebniz das Anschlagstück gegen den Werkzeughalter sowohl verstellt als auch verspannt werden.

Das Anschlagstück besteht zweckmäßig aus einer den Adapterschaft umschließenden Ringplatte und davon axial abstehenden Führungsstegen, die das Außengewinde tragen und in Führungsaussparungen verschiebbar sind, die sich axial entlang dem Futterkörper in Umfangsrichtung zwischen den Futterbacken erstrecken. Dadurch werden gute axiale Führungsverhältnisse für das Anschlagstück erreicht, indem sich nämlich die Führung der Führungsstege am Bohrfutter bis zwischen die der Futterbacken erstrecken und entsprechend lang ausgebildet sein kann, während die Ringplatte eine zusätzliche Führung am Adapterschaft besonders dann bewirken kann, wenn das Anschlagstück weit aus dem Bohrfutter gegen den Werkzeughalter vorgestellt ist. Eine bevorzugte auführungsform ist dadurch gekennzeichnet, daß die Führungsaussparungen von Führungsnuten gebildet sind, aus welchen das Außengewinde der Führungsstege radial nach außen vorsteht, und daß die Ringmutter zwischen den Führungsaussparungen gelagert ist.

Im einzelnen besteht die Möglichkeit, daß die Führungsaussparungen unmittelbar im Futterkörper ausgebildet sind und die Ringmutter am Futterkörper zwischen den Führungsaussparungen gelagert ist. Konstruktiv ist dies mit dem Vorteil nur weniger Bauteile, fertigungsmäßig aber mit dem Nachteil verbunden, daß der Futterkörper aufwendigen Fertigungsschritten unterworfen werden muß, um an ihm die Führungsaussparungen und die für die Lagerung der Ringmutter nötigen Einrichtungen herzustellen.

Daher geht ein anderer Vorschlag der Erfindung dahin, daß der Futterkörper axial unverschiebbar und undrehbar eine Futterhülse trägt, in der die Führungsaussparungen ausgebildet sind und an der die Ringmutter gelagert ist, und daß die Führungsstege von achsenparallelen Abschnitten einer mit der Futterhülse koaxialen Zylinderwand gebildet sind. Die Führungsaussparungen und die in ihnen laufenden Führungsstege lassen sich dann fluchtend in die Wand der Futterhülse integrieren, wobei die Futterhülse selbst vergleichsweise einfach und kostensparend, etwa als aus Kunststoff bestehendes Spritzgußteil, hergestellt werden kann.

Zweckmäßig ist die Futterhülse auf der den Futterbacken zugekehrten Seite und in Umfangsrichtung zwischen den Führungsaussparungen mit Freischnitten für die Futterbacken versehen, so daß die Verstellung der Futterbacken durch die Futterhülse auch bei größerer Hülsenlänge nicht beeinträchtigt werden kann. Im übrigen besteht die Möglichkeit, in die aus Kunststoff bestehende Futterhülse auf der von den Futterbacken abgewandten Seite einen die Führungsaussparungen freilassenden Stahlring einzusetzen, der innenseitig mit der Futterhülse stufenlos fluchtet und einen Anschlag für im Futterkörper radial bewegliche, den Futterkörper mit dem Adapterschaft verbindende Kupplungsglieder bildet. Der Stahlring bietet die für den Anschlag der Kupplungsglieder, zumeist Stahlkugeln, benötigte, vom Kunstoff der Futterhülse nicht zu erbringende Oberflächenfestigkeit und -härte. Im übrigen kann der Stahlring sehr vorteilhaft zur Lagerung der Ringmutter herangezogen werden. Insoweit ist eine bevorzugte Ausführungsform der Erfindung dadurch gekennzeichnet, daß der Stahlring an seinem axial äußeren Rand zwischen den Führungsaussparungen radial nach außen über den Rand der Futterhülse abgewinkelte und vorstehende Laschen aufweist, die in eine auf der Innenseite der Ringmutter vorgesehene Ringnut greifen. Die Ringmutter ist dadurch gegen Axialverstellungen gesuchert. Zweckmäßig können die Laschen in Umfangsrichtung jeweils paarweise nebeneinander angeordnet sein und die beiden Laschen jedes Laschenpaares zwischen sich eine Lücke bilden, in die ein an der Futterhülse befindlicher Nocken greift, so daß sich die Stahlhülse nicht gegenüber der Futterhülse verdrehen kann. Die Futterhülse kann ihrerseits an ihrem den Futterbacken zugekehrten Rand Aufnahmen für Nasen aufweisen, die fest am Futterkörper angeordnet sind und die Futterhülse gegen Verdrehen sichern.

Im folgenden wird die Erfindung an in der Zeichnung dargestellten Ausführungsbeispielen näher erläutert; es zeigen:

Fig. 1    einen Axialschnitt durch ein Bohrfutter nach der Erfindung,

Fig. 2    ein Detail des Gegenstandes nach Fig. 1 in einer anderen Ausführungsform,

Fig. 3    den Querschnitt III - III in Fig. 1,

Fig. 4    den Längsschnitt IV - IV in Fig. 1,

Fig. 5    einen Axialschnitt durch eine andere Ausführungsform des erfindungsgemäßen Bohrfutters,

Fig. 6    den Querschnitt VI - VI in Fig. 5,

Fig. 7    den Querschnitt VII - VII in Fig. 5,

Fig. 8    den Längsschnitt VIII - VIII in Fig. 5, und

Fig. 9    das Bohrfutter nach den Fig. 5 bis 7 in einer Schrägdarstellung bei axial auseinandergezogenen Futterteilen.

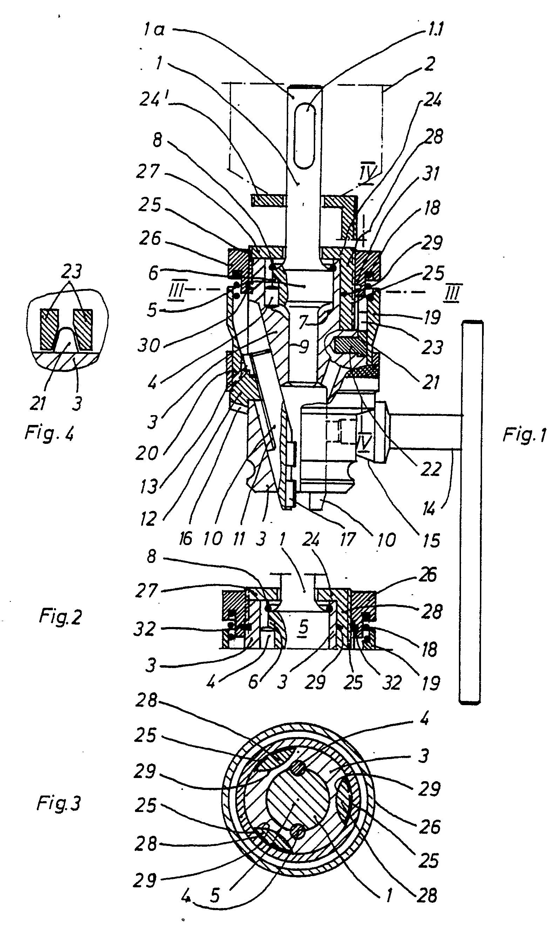

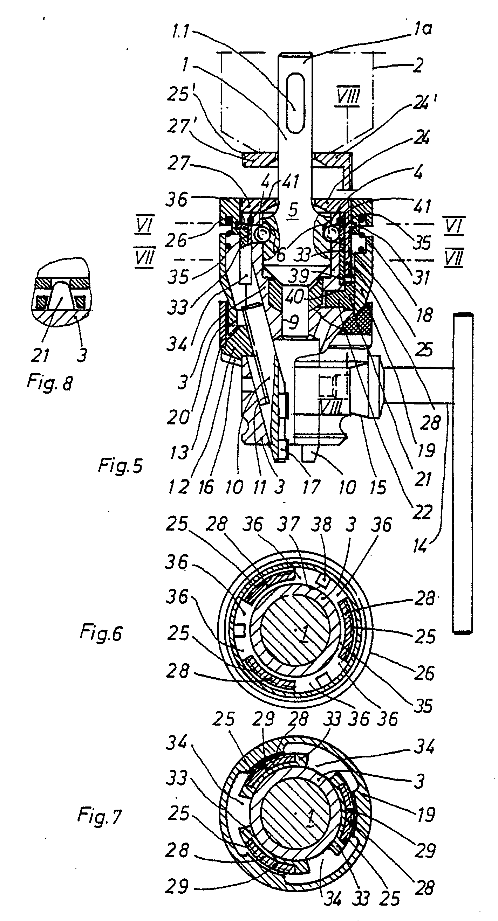

Die in der Zeichnung dargestellten Bohrfutter besitzen einen Adapterschaft 1, dessen freies Ende 1a zur Aufnahme in einem in den Fig. 1 und 5 lediglich gestrichelt angedeuteten Werkzeughalter 2 einer im übrigen nicht dargestellten Hammerbohrmaschine ausgebildet ist. Dazu besitzt der Adapterschaft 1 zwei an beiden Enden geschlossene, sich diametral gegenüber liegende Längsnuten 1.1, und um 90° gegenüber diesen versetzt zwei sich ebenfalls diametral gegenüber liegende, zum Ende des Adapterschaftes 1a hin offene Längsnuten 1.2. Die letzteren Längsnuten 1.2 dienen im Werkzeughalter 2 der drehschlüssigen Mitnahme des Adapterschaftes 1, während die an beiden Enden geschlossenen Längsnuten 1.1 dem Adapterschaft im Werkzeughalter ein durch die beiden Enden der Längsnuten 1.1 begrenztes axiales Bewegungsspiel ermöglichen. In die Längsnuten 1.1, 1.2 greifen Mitnehmer bzw. radial verstellbare Verriegelungsglieder des Werkzeughalters 2, was aber im einzelnen bekannt ist und daher keiner weiteren Beschreibung bedarf.

Der Adapterschaft 1 ist drehschlüssig und mit axialem Verschiebungsspiel auch im Bohrfutter gehalten, was in den Ausführungsbeispielen dadurch erreicht wird, daß in einem den Adapterschaft 1 aufnehmenden Futterkörper 3 Kupplungsglieder 4 vorgesehen sind, die in axial im Vergleich zu den Kupplungsgliedern 4 längere, ebenfalls axial in einem Bund 5 des Adapterschaftes 1 verlaufende Nutem 6 greifen und dabei trotz des axialen Verschiebungsspiels die Drehschlüssigkeit zwischen dem Futterkörper 3 und dem Adapterschaft 1 bewirken. Das axiale Verschiebungsspiel des Adapterschaftes 1 im Futterkörper 3 wird bei dem Bohrfutter nach Fig. 1 einerseits durch eine ringförmige Anschlagfläche 7 des Futterkörpers 3, andererseits durch einen in den Futterkörper 3 eingelassenen Anschlagring 8 für den Bund 5 des Adapterschaftes 1 begrenzt. Im Ausführungsbeispiel nach Fig. 5 sind dagegen die Kupplungsglieder 4 axial unverstellbar im Futterkörper 3 gehalten, so daß hier die beiden axialen Enden der Nuten 6 das axiale Bewegungsspiel des Adapterschaftes 1 begrenzen.

In allen Fällen besitzt der Futterkörper 3 einen axialen Durchgang 9, durch den hindurch die Schlagwirkung des Adapterschaftes 1 auf das Ende eines in der Zeichnung nicht dargestellten Bohrers übertragbar ist, der im Bohrfutter zwischen zentrisch verstellbaren Futterbacken 10 gehalten ist. Die Futterbacken 10 sind schräg zur Futterachse im Futterkörper 3 geführt und besitzen eine Verzahnung 11, die in ein Innengewinde eines am Futterkörper 3 drehbar und axial unverschiebbar gelagerten Spannrings 12 greift. Dieser Spannring 12 besteht aus zwei Ringhälften, die durch eine Spannhülse 13 miteinander verbunden sind. Um zum Zwecke rein drehenden Bohrens den Bohrer fest zwischen den Futterbakken 10 einspannen zu können, kann am Futterkörper 3 ein Spannschlüssel 14 angesetzt werden, der mit einem Zahnritzel 15 in einen Zahnkranz 16 des Spannrings 12 greift. Zum Hammerbohren wird dagegen der Bohrer axial verschieblich zwischen den Futterbacken 10 geführt. Um dabei unnötigen Verschleiß der Futterbacken 10 zu verhindern, sind die Futterbacken 10 an ihren Spannflächen mit Hartmetalleinsätzen 17 ausgestattet. Um in dieser Betriebsart ein selbsttätiges Verdrehen des Spannrings 12 und dadurch unbeabsichtigte Verstellungen der Futterbacken 10 zu verhindern, ist eine am Futterkörper 3 undrehbar, aber axial gegen den Druck einer Feder 18 verschiebbar geführte Sperrhülse 19 vorgesehen, die an ihrem dem Spannring 12 zugewandten Rand eine Verzahnung 20 trägt, die unter dem Druck der Feder 18 in eine Gegenverzahnung des Spannrings 12 eingreift, wodurch der Spannring 12 und die Sperrhülse 19 im Verzahnungsrastsitz miteinander verbunden sind. Jedoch vermag dieser Rastsitz nicht ein beabsichtigtes Verdrehen des Spannrings 12 von Hand unmittelbar oder mit Hilfe des Spannschlüssels 14 zu verhindern, da in diesem Fall die Sperrhülse 19 gegen die Kraft der Feder 18 über die dazu schrägen Zahnflanken vorübergehend aus dem Verzahnungseingriff herausgedrückt wird. Die Verdrehsicherung der Sperrhülse 19 erfolgt mittels Nasen 21, die an Bolzen 22 ausgebildet sind, welche radial in Bohrungen des Futterkörpers 3 eingesteckt sind. Auf der Innenseite der Sperrhülse 19 sind für jede Nase 21 zwei den Nasen beidseits anliegende Anschlagstücke 23 vorgesehen, die das axiale Verstellen der Sperrhülse 19 nicht behindern.

Um das axiale Verschiebungsspiel des Adapterschaftes 1 sowohl im Futterkörper 3 als auch im Werkzeughalter 2 der Hammerbohrmaschine ausschalten zu können, ist am Bohrfutter ein Anschlagstück 24 geführt, das über das auf der Seite des Adapterschaftes 1 befindliche Ende des Bohrfutters hinaus axial verstellbar und in dieser Richtung kraft- und formschlüssig gegen den Werkzeughalter 2 der Hammerbohrmaschine verspannbar ist. Diese letztere Stellung des Anschlagstükkes 24 ist in den Fig. 1 und 5 jeweils bei 24' dargestellt. Im übrigen zeigen beide Figuren die vollständig in das Bohrfutter eingefahrene Stellung des Anschlagstücks 24. Das Anschlagstück 24 ist in Bezug auf den Futterkörper 3 axial verschiebbar und undrehbar angeordnet. Es greift mit einem Außengewinde 25 in eine in Bezug auf den Futterkörper 3 drehbar und axial unverschiebbar gelagerte, von außen durch Hand betätigbare Ringmutter 26. Das Anschlagstück 24 besteht aus einer den Adapterschaft 1 umschließenden Ringplatte 27 und aus davon auf der vom Werkzeughalter 2 abgewandten Seite axial abstehenden Führungsstegen 28, die das Außengewinde 25 tragen und in Führungsaussparungen 29 verschiebbar sind, die sich axial entlang dem Futterkörper 3 und in Umfangsrichtung zwischen den Futterbacken 10 erstrecken. Diese Führungsaussparungen 29 sind von Fuhrungsnuten gebildet, aus welchen das Außengewinde 25 der Führungsstege 28 radial nach außen soweit vorsteht, daß es in die Ringmutter 26 eingreifen kann, die ihrerseits in Umfangsrichtung zwischen den Führungsaussparungen 29 gelagert ist.

Im Ausführungsbeispiel nach den Fig. 1 bis 4 sind die Führungsaussparungen 29 unmittelbar im Futterkörper 3 ausgebildet. Die Ringmutter 26 ist am Futterkörper 3 zwischen den Führungsaussparungen 29 gelagert. Dazu ist im Fall der Fig. 1 der Futterkörper 3 in den Bereichen zwischen den Führungsaussparungen 29 mit einem radial auswärts gerichteten Ringsteg 30 versehen, der in eine Ringnut 31 auf der Innenseite der Ringmutter 26 greift und diese dadurch gegen Axialverschiebungen sichert. Im Ausführungsbeispiel nach Fig. 2 dagegen sind außer in der Ringmutter 26 auch im Futterkörper 3 sich gegenüberliegende Ringnuten vorgesehen, in die ein Federring 32 greift, der im Bereich der Führungsstege 28 eine zur Aufnahme des Außengewindes 25 der Führungsstege 28 erforderliche Ausnehmung besitzt.

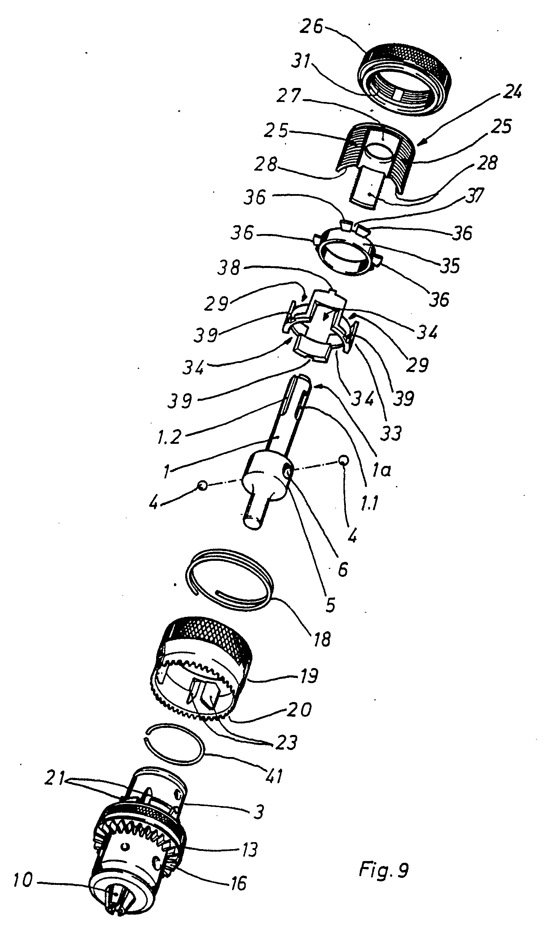

Im Ausführungsbeispiel nach den Fig. 5 bis 9 dagegen trägt der Futterkörper 3 eine auf ihm axial unverschiebbare und undrehbare Futterhülse 33, in der die Führungsaussparungen 29 ausgebildet sind und mit deren Hilfe die Ringmutter 26 gelagert ist. Die Führungsstege 28 sind con achsenparallelen Abschnitten einer mit der Futterhülse 33 koaxialen Zylinderwand gebildet, so daß sie sich fluchtend mit der Außenfläche der Futterhülse 33 in die Führungsaussparungen 29 einbetten. Auf der den Futterbacken 10 zugekehrten Seite und in Umfangsrichtung zwischen den Führungsaussparungen 29 ist die Futterhülse 33 mit Freischnitten 34 für die Futterbacken 10 versehen, so daß die Futterhülse 33 die Verstellung der Futterbacken 10 nicht behindern kann. Die Futterhülse 33 wird in der Regel als aus Kunststoff bestehendes Spritzgußteil hergestellt werden. Dann reicht allerdings ihre Oberflächenhärte nicht aus, den für die Kupplungsglieder 4 erforderlichen radialen Anschlag zu bilden. Daher

ist in dei Futterhülse 33 auf der von den Futterbakken 10 abgewandten Seite ein die Führungsaussparungen 29 freilassender Stahlring 35 eingesetzt, der innenseitig mit der Futterhülse 33 stufenlos fluchtet und den Anschlag für die Kupplungsglieder 4 bildet. Der Stahlring besitzt an seinem äußeren Rand zwischen den Führungsaussparungen 29 radial nach außen über den Rand der Futterhülse 33 abgewinkelte und vorstehende Laschen 36, die in die auf der Innenseite der Ringmutter 26 vorgesehene Ringnut 31 greifen und die Ringmutter 26 gegen axiale Verschiebungen sichern. Die Laschen 36 sind in Umfangsrichtung jeweils paarweise nebeneinander angeordnet und bilden jeweils zwischen sich eine Lücke 37, in die ein an der Futterhülse 33 befindlicher Nocken 38 greift, so daß im Ergebnis der Stahlring 35 unverdrehbar an der Futterhülse 33 gehalten ist. An ihrem den Futterbacken 10 zugekehrten Rand besitzt die Futterhülse 33 Aufnahmen 39 für die Nasen 21, die somit nicht nur die Sperrhülse 19, sondern auch die Futterhülse 33 gegen Verdrehung sichern. Die axiale Verschiebungssicherung der Futterhülse 33 wird einerseits durch einen Ringbund 40 am Futterkörper 3, andererseits durch einen in eine Nut des Futterkörpers 3 eingelegten Federring 41 erreicht, an der bzw. dem sich die Ränder der Futterhülse 33 bzw. des Stahlrings 35 axial abstützen.

Wird das Anschlagstück 24 aus der in das Bohrfutter vollständig eingefahrenen Stellung axial gegen den Werkzeughalter 2 in die mit 24' bezeichnete Stellung verschoben und gegen den Werkzeughalter 2 verspannt, wird das Bohrfutter axial vom Werkzeughalter 2 weggedrückt, bis sich der Adapterschaft 1 sowohl im Bohrfutter als auch im Werkzeughalter 2 an die entsprechenden, jeweils dort sein axiales Bewegungsspiel begrenzenden Anschläge anlegt, was gleichbedeutend damit ist, daß der Adapterschaft 1 jeweils maximal aus dem Werkzeughalter 2 bzw. dem Bohrfutter herausgezogen ist. Im Ergebnis werden dadurch nicht nur das Bohrfutter und der Werkzeughalter gleichsam starr miteinander verbunden, sondern der Adapterschaft 1 wird im Werkzeughalter 2 auch aus dem Schlagbereich des Döppers gebracht, so daß in diesem Betriebszustand auch dann auf den Adapterschaft 1 keine Schläge ausgeübt werden können, wenn durch eine Fehlbedienung der Hammerbohrmaschine deren Schlagwerk nicht abgeschaltet worden ist und der Döpper weiterhin seine Hammerbewegungen ausüben sollte.

## Ansprüche

1. Bohrfutter mit einem zur Aufnahme im Werkzeughalter (2) einer Hammerbohrmaschine ausgebildeten Adapterschaft (1), der drehschlüssig und mit axialem Verschiebungsspiel im Bohrfutter gehalten ist, das einen axialen Durchgang (9) aufweist, durch den hindurch die Schlagwirkung des Adapterschafts (1) auf das Ende eines im Bohrfutter zwischen zentrisch verstellbaren Futterbacken (10) gehaltenen Bohrers übertragbar ist,
dadurch gekennzeichnet, daß am Bohrfutter ein Anschlagstück (24) geführt ist, das über das auf der Seite des Adapterschafts (1) befindliche Ende des Bohrfutters hinaus axial verstellbar und in dieser Richtung kraft- und formschlüssig gegen den Werkzeughalter (2) der Hammerbohrmaschine verspannbar ist.

2. Bohrfutter nach Anspruch 1, dadurch gekennzeichnet, daß in Bezug auf einen die Futterbacken (10) und den Adapterschaft (1) aufnehmenden und führenden Futterkörper (3) das axial verschiebbar und undrehbar angeordnete Anschlagstück (24) mit einem Außengewinde (25) in eine drehbar und axial unverschiebbar gelagerte Ringmutter (26) greift.

3. Bohrfutter nach Anspruch 2, dadurch gekennzeichnet, daß das Anschlagstück (24) aus einer den Adapterschaft (1) umschließenden Ringplatte (27) und davon axial abstehenden Führungsstegen (28) besteht, die das Außengewinde (25) tragen und in Führungsaussparungen (29) verschiebbar sind, die sich axial entlang dem Futterkörper (3) und in Umfangsrichtung zwischen den Futterbacken (10) erstrecken.

4. Bohrfutter nach Anspruch 3, dadurch gekennzeichnet, daß die Führungsaussparungen (29) von Führungsnuten gebildet sind, aus welchen das Außengewinde (25) der Führungsstege (28) radial nach außen vorsteht, und daß die Ringmutter (26) zwischen den Führungsaussparungen (29) gelagert ist.

5. Bohrfutter nach Anspruch 4, dadurch gekennzeichnet, daß die Führungsaussparungen (29) unmittelbar im Futterkörper (3) ausgebildet sind und die Ringmutter (26) am Futterkörper (3) zwischen den Führungsaussparungen (29) gelagert ist.

6. Bohrfutter nach Anspruch 4, dadurch gekennzeichnet, daß der Futterkörper (3) axial unverschiebbar und undrehbar eine Futterhülse (33) trägt, in der die Führungsaussparungen (29) ausgebildet sind und an der die Ringmutter (26) gelagert ist, und daß die Führungsstege (28) von achsparallelen Abschnitten einer mit der Futterhülse (33) koaxialen Zylinderwand gebildet sind.

7. Bohrfutter nach Anspruch 6, dadurch gekennzeichnet, daß die Futterhülse (33) auf der den Futterbacken (10) zugekehrten Seite und in Umfangsrichtung zwischen den Führungsaussparungen (29) Freischnitte (34) für die Futterbacken (10) aufweist.

8. Bohrfutter nach Anspruch 6 oder 7, dadurch gekennzeichnet, daß in die aus Kunststoff bestehende Futterhülse (33) auf der von den Futterbacken (10) abgewandten Seite ein die Führungsaussparungen (29) freilassender Stahlring (35) eingesetzt ist, der innenseitig mit der Futterhülse (33) stufenlos fluchtet und einen Anschlag für im Futterkörper (3) radial bewegliche, den Futterkörper (3) mit dem Adapterschaft (1) verbindende Kupplungsglieder (4) bildet.

9. Bohrfutter nach Anspruch 8, dadurch gekennzeichnet, daß der Stahlring (35) an seinem äußeren Rand zwischen den Führungsaussparungen (29) radial nach außen über den Rand der Futterhülse (33) abgewinkelte und vorstehende Laschen (36) aufweist, die in eine auf der Innenseite der Ringmutter (26) vorgesehene Ringnut (31) greifen.

10. Bohrfutter nach Anspruch 9, dadurch gekennzeichnet, daß die Laschen (36) in Umfangsrichtung jeweils paarweise nebeneinander angeordnet sind und die beiden Laschen jedes Laschenpaares zwischen sich eine Lücke (37) bilden, in die ein an der Futterhülse (33) befindlicher Nocken (38) greift.

11. Bohrfutter nach einem der Ansprüche 6 bis 10, dadurch gekennzeichnet, daß die Futterhülse (33) an ihrem den Futterbacken (10) zugekehrten Rand Aufnahmen (39) für Nasen (21) aufweist, die fest am Futterkörper (3) angeordnet sind und die Futterhülse (33) gegen Verdrehen sichern.

## Claims

1. Drill chuck with an adapter shaft (1), which is formed to be received in the tool holder (2) of a hammer drill and which is held with rotary locking and with axial displacement play in the drill chuck, which has an axial passage (9), through which the percussion effect of the adapter shaft (1) is transmissible to the end of a drill held in the drill chuck between centrally adjustable chuck jaws (10), characterised in that a stop member (24) is guided on the drill chuck and is axially movable beyond the end of the drill chuck located on the side of the adapter shaft (1) and is braceable in this direction with non-positive and positive locking against the tool holder (2) of the hammer drill.

2. Drill chuck according to claim 1, characterised in that relative to a chuck body (3) receiving and guiding the chuck jaws (10) and the adapter shaft (1), the axially displaceably and non-rotatably mounted stop member (24) engages with a male thread (25) in a rotatably and axially non-displaceably mounted annular nut (26).

3. Drill chuck according to claim 2, characterised in that the stop member (24) consists of an annular plate (27) enclosing the adapter shaft (1) and guide webs (28) projecting axially therefrom, which carry the male thread (25) and are displaceable in guide recesses (29) which extend axially along the chuck body (3) and in the circumferential direction between the chuck jaws (10).

4. Drill chuck according to claim 3, characterised in that the guide recesses (29) are formed by guide grooves, from which the male thread (25) of the guide webs (28) projects radially outwards, and in that the annular nut (26) is mounted between the guide recesses (29).

5. Drill chuck according to claim 4, characterised in that the guide recesses (29) are formed directly in the chuck body (3) and the annular nut (26) is mounted on the chuck body (3) between the guide recesses (29).

6. Drill chuck according to claim 4, characterised in that the chuck body (3) carries axially non-displaceably and non-rotatably a chuck sleeve (33), in which the guide recesses (29) are formed and on which the annular nut (26) is mounted, and in that the guide webs (28) are formed by axially parallel sections of a cylinder wall coaxial with the chuck sleeve (33).

7. Drill chuck according to claim 6, characterised in that the chuck sleeve (33) has on the side facing the chuck jaws (10) and in the circumferential direction between the guide recesses (29) open slots (34) for the chuck jaws (10).

8. Drill chuck according to claim 6 or 7, characterised in that a steel ring (35) releasing the guide recesses (29) is inserted into the chuck sleeve (33) consisting of plastics material on the side facing away from the chuck jaws (10), which steel ring (35) is flush on the inside, without a step, with the chuck sleeve (33) and forms a stop for coupling members (4), which connect the chuck body (3) to the adapter shaft (1) and are movable radially in the chuck body (3).

9. Drill chuck according to claim 8, characterised in that the steel ring (35) has on its outer edge between the guide recesses (29) clips (36), which are bent over the edge of the chuck sleeve (33) and project radially outwards and which engage in an annular groove (31) provided on the inside of the annular nut (26).

10. Drill chuck according to claim 9, characterised in that the clips (36) are arranged adjacently in pairs in the circumferential direction and the two clips of each pair form a gap (37) between them into which a dog (38) located on the chuck sleeve (33) engages.

11. Drill chuck according to one of claims 6 to 10, characterised in that the chuck sleeve (33) has on its edge facing the chuck jaws (10) seats (39) for lugs (21), which are mounted rigidly on the chuck body (3) and which prevent the chuck sleeve (33) from rotating.

## Revendications

1. Mandrin de serrage avec une tige d'adaptation (1) conformée pour la mise en place dans le porte-outil (2) d'une perceuse à percussion et maintenue de façon rigide en rotation et avec jeu de déplacement axial dans le mandrin de serrage lequel présente un passage axial (9) au travers duquel l'action de percussion de la tige d'adaptation (1) peut être transmise à l'extrémité d'un foret maintenu dans le mandrin de serrage entre des mâchoires de serrage (10) déplaçables concentriquement, **caractérisé par le fait** que sur le mandrin de serrage est guidée une butée (24) qui peut être déplacée axialement au-delà de l'extrémité du mandrin de serrage située du côté de la tige d'adaptation (1) et bloquée dans cette direction par adhérence et à engagement positif contre le porte-outil (2) de la perceuse à percussion.

2. Mandrin de serrage selon la revendication 1, caractérisé par le fait que, par rapport à un corps de mandrin (3) recevant et guidant les mâchoires de serrage (10) et la tige d'adaptation (1), la butée (24) montée de manière mobile dans le sens axial et rigide en rotation s'engage avec un filetage extérieur (25) dans un écrou à anneau (26) tournant et axialement immobile.

3. Mandrin de serrage selon la revendication 2, caractérisé par le fait que la butée (24) est constituée par une plaque annulaire (27) qui entoure la tige d'adaptation (1) et comporte des nervures de guidage (28) lesquelles s'en écartent axialement, portent le filetage extérieur (25) et peuvent être déplacées dans des évidements de guidage (29) qui s'étendent axialement le long du corps de mandrin (3) et, dans le sens circonférentiel, entre les mâchoires de serrage (10).

4. Mandrin de serrage selon la revendication 3, caractérisé par le fait que les évidements de guidage (29) sont constitués par des rainures de guidage desquelles le filetage extérieur (25) des nervures de guidage (28) dépasse radialement vers l'extérieur, et que l'écrou à anneau (26) est placé entre lesdits évidements de guidage (29).

5. Mandrin de serrage selon la revendication 4, caractérisé par le fait que les évidements de guidage (29) sont conformés directement dans le corps de mandrin (3), et que l'écrou à anneau (26) est monté sur le corps de mandrin (3), entre les évidements de guidage (29).

6. Mandrin de serrage selon la revendication 4, caractérisé par le fait que le corps de mandrin (3) porte un manchon (33) axialement immobile et rigide en rotation dans lequel sont conformés les évidements de guidage (29) et sur lequel est monté l'écrou à anneau (26), et que les nervures de guidage (28) sont constituées par des sections parallèles à l'axe d'une paroi cylindrique coaxiale au manchon (33).

7. Mandrin de serrage selon la revendication 6, caractérisé par le fait que le manchon (33) est muni, du côté dirigé vers les mâchoires de serrage (10) et, dans le sens circonférentiel, entre les évidements de guidage (29), de découpages (34) pour les mâchoires de serrage (10).

8. Mandrin de serrage selon l'une des revendications 6 ou 7, caractérisé par le fait que dans le manchon (33) réalisé en matière plastique est inséré, du côté opposé aux mâchoires de serrage (10), un anneau d'acier (35) laissant les évidements de guidage (29) libres, qui est aligné intérieurement sans discontinuité avec le manchon (33) et forme une butée pour des organes d'accouplement (4) radialement déplaçables dans le corps de mandrin (3) et établissant la liaison entre le corps de mandrin (3) et la tige d'adaptation (1).

9.    Mandrin de serrage selon la revendication 8, caractérisé par le fait que l'anneau d'acier (35) présente sur son bord radialement extérieur, entre les évidements de guidage (29), des pattes (36) coudées et dépassant radialement vers l'extérieur du bord du manchon (33), qui s'engagent dans une rainure annulaire (31) prévue sur la face intérieure de l'écrou à anneau (26).

10.    Mandrin de serrage selon la revendication 9, caractérisé par le fait que les pattes (36) sont disposées par paires les unes à côté des autres dans le sens circonférentiel, et que les deux pattes de chaque paire de pattes forment entre elles un creux (37) dans lequel s'engage une saillie (38) conformée sur le manchon (33).

11.    Mandrin de serrage selon l'une des revendications 6 à 10, caractérisé par le fait que le manchon (33) présente, sur son bord dirigé vers les mâchoires de serrage (10), des logements (39) pour des taquets (21) qui sont solidaires du corps de mandrin (3) et bloquent le manchon (33) en rotation.

Fig. 4

Fig. 1

Fig. 2

Fig. 3

Fig. 8

Fig. 5

Fig. 6

Fig. 7

Fig. 9